# EUROPEAN PATENT APPLICATION

(11) **EP 4 622 194 A1**
(43) Date of publication of application: **24.09.2025**
(21) Application number: 22965538.6
(22) Date of filing: 17.11.2022
(51) Int. Cl.: H04L 27/00

(54) **AUTHORIZATION METHOD AND DEVICE**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); GAN, Lu, Dongguan, Guangdong 523860 (CN); CHEN, Jingran, Dongguan, Guangdong 523860 (CN)
(74) Representative: RGTH
(86) International application number: PCT/CN2022/132668
(87) International publication number: WO 2024/103356

(57) **Abstract**

The embodiments of the present application provide an authorization method and a device. The authorization method includes: receiving, by a first network device, a service message; and performing, by the first network device, a first authorization check on the service message, where the first authorization check includes an authorization check for a UE involved in the service message. The embodiments of the present application may improve security.

## Description

### TECHNICAL FIELD

The present application relates to the field of communications, and in particular, to authorization methods and devices.

### BACKGROUND

A network needs to first perform a service message authorization check before providing a service in response to a service message. In related technologies, authorization check is performed on the service message based only on local configuration, which may cause a series of security issues, for example, using unauthorized terminal user equipment (UE) or network resources.

### SUMMARY

Embodiments of the present application provide authorization methods and devices, which may improve security.

The embodiments of the present application provide an authorization method, which includes:
receiving, by a first network device, a service message; and
performing, by the first network device, a first authorization check on the service message, where the first authorization check includes an authorization check for a UE involved in the service message.

The embodiments of the present application provide an authorization method, which includes:
transmitting, by a fourth network device, a service message to a first network device, where the service message is used for the first network device to perform a first authorization check, and the first authorization check includes an authorization check for a UE involved in the service message.

The embodiments of the present application provide an authorization method, which includes:
receiving, by a second network device, a UE identifier and/or a group identifier in a service message from a first network device;
searching, by the second network device according to the UE identifier and/or the group identifier, for user consent and/or first service authorization of a UE involved in the service message; and
transmitting, by the second network device, the user consent and/or the first service authorization of the UE involved in the service message to the first network device.

The embodiments of the present application provide an authorization method, which includes:
receiving, by a third network device, a first authorization check result from a first network device, where the first authorization check includes an authorization check for a UE involved in a service message; and
generating, by the third network device, an access token, and transmitting the access token to a fourth network device, where the access token includes the first authorization check result.

The embodiments of the present application provide a first network device, which includes:
a first receiving module, configured to receive a service message; and
a first checking module, configured to perform a first authorization check on the service message, where the first authorization check includes an authorization check for a UE involved in the service message.

The embodiments of the present application provide a fourth network device, which includes:
a second transmitting module, configured to transmit a service message to a first network device, where the service message is used for the first network device to perform a first authorization check, and the first authorization check includes an authorization check for a UE involved in the service message.

The embodiments of the present application provide a second network device, which includes:
a fifth receiving module, configured to receive a UE identifier and/or a group identifier in a service message from a first network device;
a searching module, configured to search for user consent and/or first service authorization of a UE involved in the service message according to the UE identifier and/or the group identifier; and
a third transmitting module, configured to transmit the user consent and/or the first service authorization of the UE involved in the service message to the first network device.

The embodiments of the present application provide a third network device, which includes:
a sixth receiving module, configured to receive a first authorization check result from a first network device, where the first authorization check includes an authorization check for a UE involved in a service message; and
a generating module, configured to generate an access token, and transmit the access token to a fourth network device, where the access token includes the first authorization check result.

In the authorization method proposed in the embodiments of the present application, the first network device performs the authorization check on the UE involved in the received service message, which may obtain the permission of the relevant UE and/or user before providing the requested service, thereby improving security.

### BRIEF DESCRIPTION OF THE DRAWINGS

FIG. 1 is a schematic diagram of an application scenario of embodiments of the present application.
FIG. 2 is a schematic diagram of a relevant architecture of AI/ML services.
FIG. 3 is a schematic diagram of an AaaML service process.
FIG. 4 is a schematic flowchart of an authorization method 400 according to embodiments of the present application.
FIG. 5 is a schematic diagram of an authorization mode of CAPIF-2e method one and method two.
FIG. 6 is a schematic diagram of an authorization mode of CAPIF-2e method three.
FIG. 7 is an implementation flowchart of an authorization method of an embodiment of the present application.
FIG. 8 is an implementation flowchart of an authorization method of an embodiment of the present application.
FIG. 9 is a schematic flowchart of an authorization method 900 according to embodiments of the present application.
FIG. 10 is a schematic flowchart of an authorization method 1000 according to embodiments of the present application.
FIG. 11 is a schematic flowchart of an authorization method 1100 according to embodiments of the present application.
FIG. 12 is a schematic diagram of a structure of a first network device 1200 according to embodiments of the present application.
FIG. 13 is a schematic diagram of a structure of a first network device 1300 according to embodiments of the present application.
FIG. 14 is a schematic diagram of a structure of a fourth network device 1400 according to embodiments of the present application.
FIG. 15 is a schematic diagram of a structure of a fourth network device 1500 according to embodiments of the present application.
FIG. 16 is a schematic diagram of a structure of a second network device 1600 according to embodiments of the present application.
FIG. 17 is a schematic diagram of a structure of a second network device 1700 according to embodiments of the present application.
FIG. 18 is a schematic diagram of a structure of a third network device 1800 according to embodiments of the present application.
FIG. 19 is a schematic structural diagram of a communication device 1900 according to embodiments of the present application.
FIG. 20 is a schematic structural diagram of a chip 2000 according to embodiments of the present application.

### DETAILED DESCRIPTION

Technical solutions in the embodiments of the present application will be described below in conjunction with the accompanying drawings in the embodiments of the present application.

It should be noted that the terms "first", "second", etc. in the description and claims of the embodiments of the present application and the above-mentioned drawings are used to distinguish similar objects, and are not necessarily used to describe a specific order or sequence. The objects described by "first" and "second" may be the same or different.

The technical solutions of the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), wireless fidelity (WiFi), a 5th-generation (5G) communication system, or other communication systems.

Generally speaking, traditional communication systems support a limited number of connections which are easy to be implemented. However, with the development of the communication technology, mobile communication systems will support not only the traditional communication, but also, for example, device to device (D2D) communication, machine to machine (M2M) communication, machine type communication (MTC), vehicle to vehicle (V2V) communication, sidelink (SL) communication, vehicle to everything (V2X) communication, and the embodiments of the present application may also be applied to these communication systems.

In an implementation, a communication system in the embodiments of the present application may be applied to a carrier aggregation (CA) scenario, may also be applied to a dual connectivity (DC) scenario, and may also be applied to a standalone (SA) network deployment scenario.

In an implementation, the communication system in the embodiments of the present application may be applied to an unlicensed spectrum, where the unlicensed spectrum may also be considered as a shared spectrum; or the communication system in the embodiments of the present application may be applied to a licensed spectrum, where the licensed spectrum may also be considered as an unshared spectrum.

In the embodiments of the present application, each embodiment will be described in conjunction with a network device and a terminal device, where the terminal device may also be referred to as a user equipment (UE), an access terminal, a user unit, a user station, a mobile station, a mobile console, a remote station, a remote terminal, a mobile device, a user terminal, a terminal, a wireless communication device, a user agent, a user apparatus, or the like.

The terminal device may be a station (STATION, STA) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next-generation communication system (such as an NR network), a terminal device in a future public land mobile network (PLMN), or the like.

In the embodiments of the present application, the terminal device may be deployed on land, which includes indoor or outdoor, handheld, wearable, or in-vehicle; the terminal device may also be deployed on water (e.g., on a steamship); and the terminal device may also be deployed in the air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which is also referred to as a wearable smart device, is a generic term for a device capable of being worn, into which the daily wear is intelligently designed and developed by applying wearable technologies, such as glasses, gloves, watches, clothing, and shoes. The wearable device is a portable device that is worn directly on the body, or integrated into the user's clothing or accessories. The wearable device is not only a hardware device, but also achieves powerful functions through software supporting, data interaction, and cloud interaction. A generalized wearable smart device includes for example, a smartwatch or smart glasses, with full functions, large size, and entire or partial functions without relying on a smartphone, as well as, for example, a smart bracelet or smart jewelry for monitoring physical signs, which only focuses on a certain type of application function and needs to be used in conjunction with other devices (such as a smartphone).

In the embodiments of the present application, the network device may be a device used for communicating with a mobile device. The network device may be an access point (AP) in the WLAN, a base station (Base Transceiver Station, BTS) in the GSM or CDMA, a base station (NodeB, NB) in the WCDMA, an evolutional base station (Evolutional Node B, eNB or eNodeB) in the LTE, a relay station or an access point, an in-vehicle device, a wearable device, a network device (gNB) in an NR network, a network device in the future evolved PLMN, a network device in the NTN, or the like.

As an example but not a limitation, in the embodiments of the present application, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. Optionally, the network device may be a base station provided on land, water, or other places.

In the embodiments of the present application, the network device may provide a service for a cell, and the terminal device communicates with the network device through transmission resources (e.g., frequency domain resources, or frequency spectrum resources) used by the cell. The cell may be a cell corresponding to the network device (e.g., a base station), the cell may belong to a macro base station or a base station corresponding to a small cell, and small cells here may include: a metro cell, a micro cell, a pico cell, a femto cell, etc. These small cells have characteristics of a small coverage range and a low transmission power, which are applicable for providing a data transmission service with high speed.

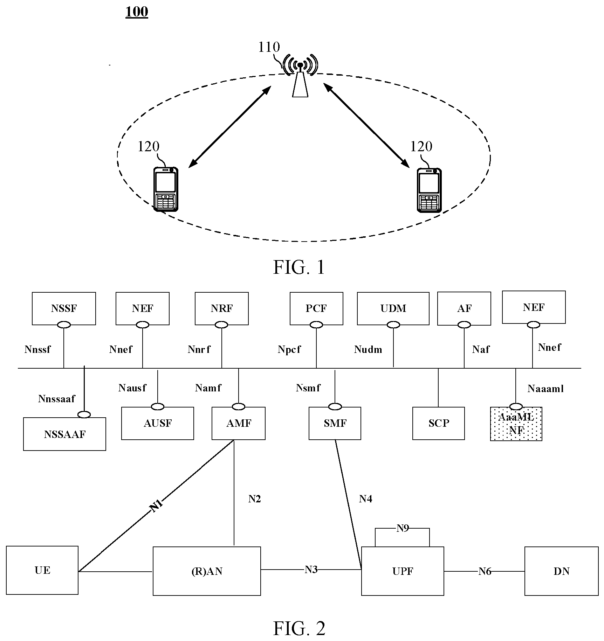

FIG. 1 exemplarily shows a communication system 100. The communication system includes a network device 110 and two terminal devices 120. In an implementation, the communication system 100 may include multiple network devices 110, and a coverage range of each network device 110 may be provided therein with other numbers of terminal devices 120, which is not limited in the embodiment of the present application.

In an implementation, the communication system 100 may further include other network entities, such as a mobility management entity (MME), an access and mobility management function (AMF), which is not limited in the embodiments of the present application.

The network device may include an access network device and a core network device. That is, the wireless communication system further includes multiple core networks for communicating with the access network device. The access network device may be an evolutional node B (which may be abbreviated as eNB or e-NodeB), a macro base station, a micro base station (also called a "small base station"), a pico base station, an access point (AP), a transmission point (TP) or a new generation Node B (gNodeB), etc. in a long-term evolution (LTE) system, a next-generation mobile communication system (next radio, NR) or an authorized auxiliary access long-term evolution (LAA-LTE) system.

It should be understood that, in the embodiments of the present application, a device with a communication function in the network/system may be referred to as a communication device. Taking the communication system illustrated in FIG. 1 as an example, communication devices may include the network device and the terminal device that have the communication function, and the network device and the terminal device may be the specific devices described above, which will not be repeated here. The communication device may further include other devices in the communication system, such as a network controller, a mobility management entity, and other network entities, which are not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent that: A exists alone, both A and B exist, and B exists alone. In addition, a character "/" herein generally means that related objects before and after this character are in an "or" relationship.

It should be understood that "indicate" mentioned in the embodiments of the present application may mean a direct indication or an indirect indication, or represent that there is an association relationship. For example, A indicates B, which may mean that A directly indicates B (for example, B may be obtained through A), or may mean that A indirectly indicates B (for example, A indicates C, and B may be obtained through C), or may mean that there is an association relationship between A and B.

In the description of the embodiments of the present application, the term "correspond" may mean that there is a direct correspondence or indirect correspondence between the two, or it may mean that there is an associated relationship between the two, or it may mean a relationship of indicating and being indicated, a relationship of configuring and being configured, etc.

To facilitate the understanding of the technical solutions in the embodiments of the present application, relevant technologies of the embodiments of the present application will be described below. The following related technologies, as optional solutions, may be arbitrarily combined with the technical solutions of the embodiments of the present application, and those combined solutions all fall within the protection scope of the embodiments of the present application.

5G system defines a series of services to assist artificial intelligence (AI)/machine learning (ML) in applying operations of the server. Before the application function (AF) is allowed the requested AI/ML services, it needs to be authorized by a 5G core network (5GC). Therefore, an issue of security authorization of an AF in the AI/ML arises. In the current architecture for the AF to obtain AI/ML services, only service authorization based on local configuration by an application AI/ML assistance network function (AaaML NF) or a network exposure function (NEF) is designed, which may cause a series of security issues, for example, the AF uses unauthorized UE or network resources. Furthermore, the service authorization in the current architecture cannot satisfy specific services in the AI/ML, more particularly, services that require additional authorization information (e.g., user authorization information).

FIG. 2 is a schematic diagram of a relevant architecture of AI/ML service, including the following contents.

1. AaaML services: AaaML services are a set of extensions to existing 5G core services (e.g., NEF services) and new 5G core services, which are specifically defined for assisting AI/ML operations of an application layer.

2. AaaML network function (NF): with the supporting of clearly determining AaaML service profile information of specific service requirements, the existing 5G core NF (e.g., the NEF) and the new 5G core NF (abbreviated as AaaML NF) may provide services for AaaML services. The new 5G core NF is AaaML NF. AaaML NF may be co-deployed with NEF or deployed independently.

3. AaaML service profile: AaaML service profile includes three main pieces of information, i.e., (1) objective of target AaaML operation; (2) input of provisioned service parameter(s); (3) output.

4. AaaML profile identification: AaaML profile identification may include (1) AaaML Profile ID, which identifies main service in the AaaML service profile; (2) AaaML Sub-Profile ID, which identifies additional services in the AaaML service; (3) Application ID; (4) user equipment ID (UE ID) or Group ID.

Table 1 describes the new 5G core services specifically defined for assisting AI/ML operations of the application, where the AaaML NF, which acts as a producer, responds to the AaaML service message, and provides the necessary coordination between various 5G core services (such as NEF service, NWDAF service) in response to AaaML service messages.

**Table 1**

| Service Name | Service Operations | Operation Semantics | Example Consumer (s) |
|---|---|---|---|
| NaaaML_Network Consent | Request | Request/Response | AF |
| | Subscribe | Subscribe/Notify | AF |
| | Unsubscribe | | AF |
| | Notify | | AF |
| NaaaML_CandidateUESelec tion | Request | Request/Response | AF |
| | Subscribe | Subscribe/Notify | AF |
| | Unsubscribe | | AF |
| | Notify | | AF |
| NaaaML_NWDAFAnalytics Collection | Subscribe | Subscribe/Notify | AF |
| | Unsubscribe | | AF |
| | Notify | | AF |

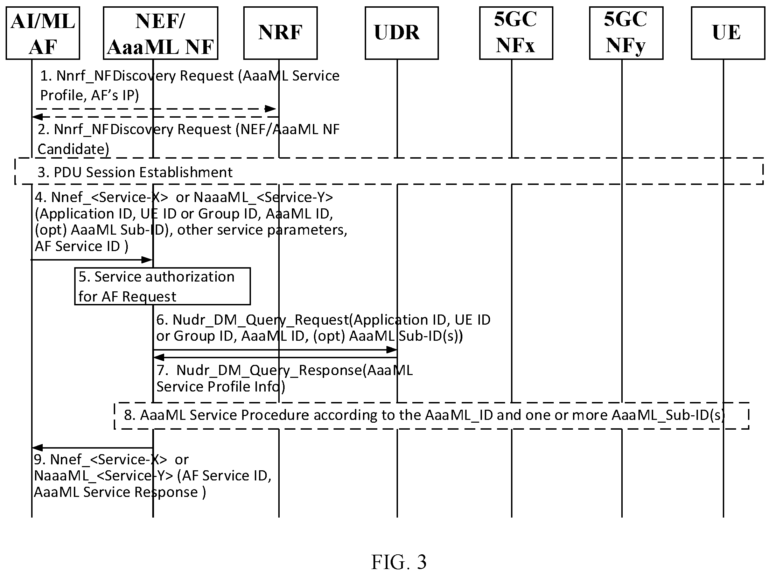

FIG. 3 is a schematic diagram of an AaaML service process, including the following steps.

In step 1-2, if an AF has not discovered it serving a NEF or AaaML NF, it will query a network repository function (NRF) to search a serving NEF or AaaML NF that supports its target AaaML service profile.

In step 3, a protocol data unit (PDU) session between a UE and the AF may have been established.

In step 4, the AF subscribes to or requests an AaaML service by transmitting a NEF service message or an AaaML service message along with required parameters and an AF transaction ID. Specifically, the request includes an application identifier, a user equipment identifier (UE ID) or group identifier (Group ID), an AaaML Profile ID, and an optional AaaML Sub-Profile ID.

In Step 5, the NEF verifies authorization of the AF request.

In steps 6-7, for a given AaaML service requesting a combined 5G service set, the NEF or AaaML NF search the AaaML service profile by transmitting a request to a UDR, where the request may carry the application identifier, the UE ID or Group ID, the AaaML profile ID and the optional AaaML sub-profile ID. The AaaML service profiles may also be stored locally in the AaaML NF.

In step 8, the NEF or AaaML NF performs the AaaML service procedure by referring to the service parameters and according to information of the AaaML service profile and the AaaML sub-profile. This procedure may involve a set of corresponding 5GC service procedures, a set of 5GC events, analyses and/or notifications.

In step 9, according to a result of the AaaML service procedure, the NEF or AaaML NF replies a service response or notification to the AF, which may be based on the collective results of a set of composite 5GC service procedures.

The 5G system defines a series of services to assist AI/ML in applying the operations of the server. Before the AF is allowed the requested AI/ML service, it needs to be authorized by the 5GC. Therefore, the issue of security authorization of the AF in the AI/ML arises. In the current architecture for the AF to obtain the AI/ML services, only service authorization based on local configuration by the AaaML NF/ NEF is designed, which may cause a series of security issues, for example, the AF uses the unauthorized UE or network resources. Furthermore, the service authorization in the current architecture cannot satisfy specific services in the AI/ML, more particularly, services that require additional authorization information (e.g., user consent).

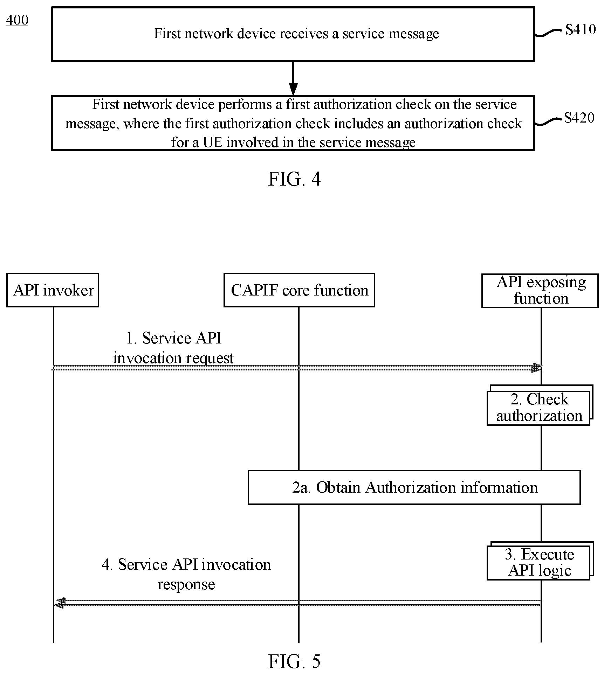

The embodiments of the present application propose an authorization method. FIG. 4 is a schematic flowchart of an authorization method 400 according to the embodiments of the present application. The method may be applied to the system illustrated in FIG. 1 or FIG. 2, but is not limited thereto. The method includes at least part of the following content.

S410, a first network device receives a service message.

S420, the first network device performs a first authorization check on the service message, where the first authorization check includes an authorization check for a terminal device involved in the service message.

In some examples, user consent of the terminal device may be used to indicate whether the terminal device consents to processing user data of the terminal device, for example, whether the terminal device consents to processing the user data of the terminal device by a third party. For instance, if it is determined that the terminal device involved in the service message consents to processing the user data of the terminal device, the first authorization check for the service message is successful.

In some examples, the first service authorization may be used to indicate whether the terminal device is authorized to use a first service, and/or indicate a type of the first service that the terminal device is authorized to use. The first service may include an artificial intelligence (AI) or machine learning (ML) service (i.e., AI/ML service). For example, if it is determined that the terminal device involved in the service message is authorized to use the first service requested by the service message, the first authorization check for the service message is successful.

For example, the AI/ML service may include at least one of: selecting terminal device members (e.g., selecting terminal device members for federated learning), collecting an analysis result for the terminal device (e.g., collecting from a network data analytics function (NWDAF)), and downloading an AI/ML model.

As an example, the first service includes collecting an analysis result for the terminal device from the NWDAF, if the first network device receives a service message, which is used to request collecting an analysis result for the UE from the NWDAF; the first network device checks user consent information of the UE involved in the service message, to determine whether the UE consents to exposing the analysis result of the user data to the application server. If it consents, the first authorization check of the service message by the first network device is successful.

The first network device may include an application AI/ML assistance network function (AaaML NF) or a network exposure function (NEF).

In some examples, the first network device may receive the service message from a fourth network device, which may include an AI/ML application function (AF).

With the authorization method proposed in the embodiments of the present application, after the first network device receives the service message from the fourth network device, the first network device may perform the first authorization check for the service message, to implement the authorization check for the terminal device (UE) involved in the service message, so that the fourth network device obtains consent of the relevant terminal device and/or user before using the requested service.

In some implementations, after receiving the service message, the first network device may first determine whether the first authorization check is required for the service message. For example, if the service requested by the fourth network device does not involve processing of user privacy data, the first authorization check is not required for the service message; if the service requested by the fourth network device involves processing of user privacy data, the first authorization check is required for the service message.

For example, the first network device may determine, according to the type and/or parameters of the service message, whether the first authorization check is required for the service message; if the first authorization check is required for the service message, the first network device performs the first authorization check on the service message. If the first authorization check is not required for the service message, the first network device does not perform the first authorization check on the service message.

In a case of performing the first authorization check on the service message, the first network device may obtain the user consent and/or the first service authorization of the terminal device involved in the service message; and
the first network device performs verification on the user consent and/or the first service authorization, and determines, according to a verification result, whether the terminal device involved in the service message consents to processing the user data of the terminal device, and/or whether the terminal device involved in the service message is authorized to use a service corresponding to the service message.

For example, the verification is performed on the user consent and/or the first service authorization of the UE involved in the service message; if the verification result is that the UE involved in the service message consents to processing the user data of the UE, and/or the verification result is that the UE involved in the service message is authorized to use the service corresponding to the service message, the first authorization check for the service message is successful.

The first network device may search for user consent and/or first service authorization stored locally, to obtain the user consent and/or first service authorization of the UE involved in the service message, or the first network device may obtain the user consent and/or first service authorization of the UE involved in the service message from other network devices.

For example, the first network device searches, according to a terminal device identifier (e.g., UE ID) and/or a group identifier (e.g., Group ID) in the service message, for the user consent and/or the first service authorization of the terminal device involved in the service message.

For another example, the first network device transmits the terminal device identifier (e.g., UE ID) and/or the group identifier (e.g., Group ID) in the service message to a second network device; and
the first network device receives the user consent and/or the first service authorization of the terminal device involved in the service message from the second network device. The user consent and/or the first service authorization of the terminal device involved in the service message may be obtained by searching by the second network device according to the terminal device identifier (e.g., UE ID) and/or the group identifier (e.g., Group ID).

The UE ID may be a subscription permanent identifier (SUPI) or a generic public subscription identifier (GPSI), and the group identifier may be a group of SUPIs or a group of GPSIs.

In some implementations, the second network device may include a unified data management (UDM).

In a case where the first authorization check for the service message fails, the first network device may transmit a service message failure response to the fourth network device, where the service message failure response includes first authorization check failure information. For example, by checking the user consent and the first service authorization of the UE involved in the service message, it is determined that the UE does not consent to processing its own user data and/or the UE is not authorized to use the service requested by the service message, the service message failure response is transmitted to the fourth network device, where the service message failure response includes the first authorization check failure information.

In related technologies, a network device needs to be authorized by a core network (e.g., 5GC) before using a service requested by itself, to solve the security authorization issue of the network device. In the embodiments of the present application, the first authorization check may be combined with authorization in the related technologies. For example, in some implementations, the embodiments of the present application further include that the first network device performs a second authorization check for the service message of the fourth network device, where the second authorization includes authorization of the service message by the core network. The core network may include 5GC.

In the embodiments of the present application, the first authorization check may be performed before or after the second authorization check. After receiving the service message from the fourth network device, if both the first authorization check and the second authorization check for the service message by the first network device are successful, the relevant services may be provided for the fourth network device.

As an example, the fourth network device is an application function (AF), in the related technologies, a CAPIF-2e mode or an OAuth 2.0 mechanism may be adopted for the service authorization for the AF. For the CAPIF-2e authorization mode, there are three solutions for the protection (authentication and authorization) of the CAPIF-2e interface.
Method one: Using TLS-PSK
Method two: Using PKI

The authorization mechanism of Method two is similar to that of Method one. FIG. 5 is a schematic diagram of an authorization mode of Method one and Method two of CAPIF-2e, including the following contents.

Step 1. An application programming interface (API) invoker triggers a service API invocation request to an API exposing function (AEF), the API invocation request includes a service API to be invoked. AF may act as the API invoker. API invokers may asynchronously trigger multiple service API invocations.

Step 2. After receiving the service API invocation request, AEF checks whether the API invoker is authorized to invoke the service API according to authorization information.

Step 2a. If the AEF does not have the information required to authorize the service API invocation, the AEF obtains the authorization information from a common API framework (CAPIF) core function.

Step 3. If the AEF determines that the API invoker is authorized to invoke the service API by checking, the AEF executes the service logic for the invoked service API.

Step 4. The API invoker receives a service API invocation response as a result of the service API invocation.

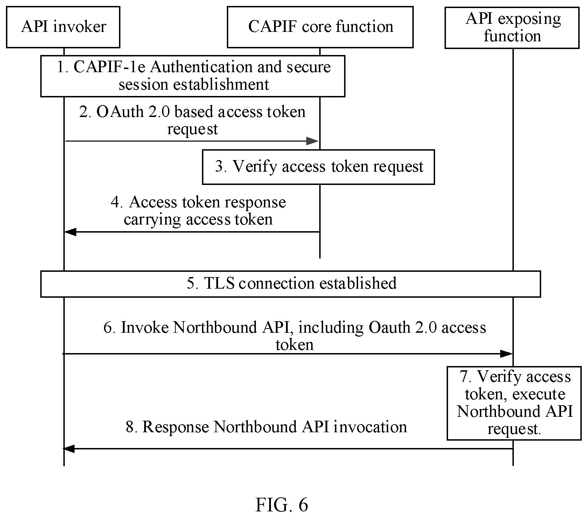

Method three: TLS and authorization (OAuth) token. FIG. 6 is a schematic diagram of an authorization mode of Method three of CAPIF-2e, including the following contents.

Step 1. CAPIF-1e authentication and secure session establishment.

Step 2. After successfully establishing a TLS session on CAPIF-1e (i.e., a TLS session is established between the API invoker and the CAPIF core function), the API invoker transmits an access token request message to the CAPIF core function.

Step 3. The CAPIF core function verifies the access token request message.

Step 4. If the CAPIF core function successfully verifies the access token request message, the CAPIF core function generates an access token specific to the API invoker, and returns an access token response message to the API invoker, where the access token response message carries the access token.

If the API invoker already has a valid access token, steps 1 to 4 of this procedure may be skipped. In this case, the API invoker starts the procedure at step 5.

Step 5. On CAPIF-2e, the API invoker establishes a TLS session with the API exposing function for authentication.

Step 6. After successfully authenticating the AEF on CAPIF-2e, the API invoker shall initiate a 3GPP northbound API invocation with AEF. The access token received from the CAPIF core function should be transmitted along with the northbound API invocation request.

Step 7. API exposing function (AEF) verifies the access token. The AEF verifies the integrity of the access token by verifying the CAPIF core function signature. If the access token verification is successful, the AEF will verify the northbound API invocation request of API invoker according to the authorization statement in the access token, to ensure that the API invoker has an access right of the requested service API.

Step 8. After the access token and authorization statement of the API invoker are successfully verified, the requested northbound API is invoked and the appropriate response is returned to the API invoker.

For the OAuth 2.0 authorization mechanism, the request transmitted by the AF to the NEF/AaaML NF includes an access token generated through the OAuth 2.0 mechanism. The AF obtains authorization from 5GC through the access token.

In a case where the AF is trusted, that is, the AF is a network element belonging to the interior of an operator's network, the AF requests to access to the service of the network function (NF) within 5GC. The AF requests an access token generated based on the OAuth 2.0 mechanism from the NRF, and the AF obtains authorization for NF services through the access token.

The above introduces the AF service authorization technology in the related technologies. The authorization method proposed in the embodiments of the present disclosure may be combined with this authorization procedure. For example, in the embodiments of the present application, the service may include an AI/ML service message, and the first network device may be an application AI/ML assistance network function (AaaML NF) or a network exposure function (NEF). The AaaML NF or NEF may act as an AEF to perform authorization check on the service message of the fourth network device (e.g., the AI/ML AF), and provide services to the AI/ML AF if the authorization check is successful.

The first authorization check for the service message by the first network device may be performed before or after the AF service authorization in the related technologies. If the first authorization check is performed before CAPIF authorization, and Method three above is applied to the CAPIF authorization, after the first network device performs the first authorization check for the service message, the embodiments of the present application may further include:
in a case where the first authorization check for the service message is successful, transmitting, by the first network device, a first authorization check result to a third network device; and
receiving, by the first network device, an access token, where the access token includes the first authorization check result, where the access token is generated by the third network device after performing the second authorization check on the service message.

For example, the third network device may include a CAPIF core function or a network repository function (NRF). After the CAPIF core function generates the access token, it transmits the access token to the fourth network device (e.g., the AI/ML AF), and then the fourth network device (e.g., the AI/ML AF) transmits the access token including the first authorization check result to the first network device.

The Access token may further include expiration time. As an example, the first authorization includes user consent, if the user consent is cancelled (revoked), the access token will be cancelled (revoked) even if the expiration time of the related access token has not yet been reached.

For example, the first network device receives, from the second network device, user consent cancelling information of the service message from the terminal device involved in the service message;
according to the user consent cancelling information, the first network device performs at least one of the following operations:
setting the access token as invalid; and
transmitting the service message failure response (e.g., transmitting the service message failure response to the fourth network device), where the service message failure response includes first authorization check failure information.

If the first authorization check is performed before the CAPIF authorization, and Method one and Method two above are applied to the CAPIF authorization; or the first authorization check is performed after the CAPIF authorization, and Method one and Method two above are applied to the CAPIF authorization, the embodiments of the present application may further include:
obtaining, by the first network device, second authorization information corresponding to the service message; and
performing, by the first network device according to the second authorization information corresponding to the service message, the second authorization check on the service message.

The first network device may search for the second authorization information stored locally to obtain the second authorization information corresponding to the service message; or the first network device may obtain the second authorization information corresponding to the service message from other network devices.

For example, the first network device searches for the second authorization information corresponding to the service message stored locally.

For another example, the first network device transmits a network device identifier (e.g., an identifier of an AF that transmits the service message) and/or service name of the service message to the third network device; the first network device receives the second authorization information corresponding to the service message from the third network device, where the second authorization information corresponding to the service message is obtained by searching by the third network device according to the network device identifier and/or service name. The third network device may include the CAPIF core function.

As an example, the first authorization includes user consent and the first authorization check includes the user consent check of the UE involved in the service message, the following introduces the authorization method proposed in the embodiments of the present application.

Example one: performing the user consent check before the CAPIF authorization.

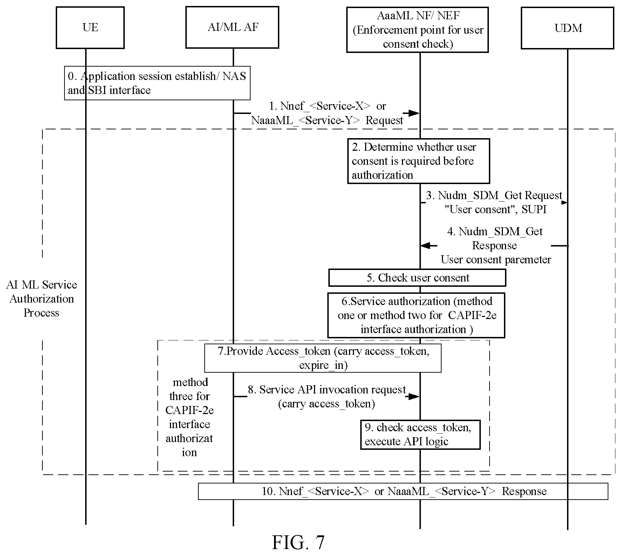

FIG. 7 is an implementation flowchart of an authorization method of an embodiment of the present application, including the following contents.

Step 0. The UE and the AI/ML AF (which may be referred to as AF) may have established a secure connection, which has two modes. That is, (1) an application layer session has been established, UE-SMF-UPF-AF, in which the AF and the UE have established TLS application layer security. The AF may obtain the identity of the UE (e.g., the AF obtains a SUPI and a GPSI of the UE); (2) A connection based on network attached storage (NAS) and a service based interface (SBI) has been established, UE-AMF-AF, and the AF may obtain the identity of the UE, for example, obtaining the identity of the UE via an AMF.

Step 1. The AI/ML AF transmits a service message to an AaaML NF/NEF, for example, transmitting an NaaaML_<Service-X>Request message or Nnef_<Service-X> message. The service message may include a data processing preference to facilitate checking and determining user consent.

Step 2. AaaML NF/NEF may act as an enforcement point for user consent check, and may determine an actual purpose of data processing according to a type of the service message of the AI/ML AF.

For example, the AaaML NF/NEF determines whether the user consent is required before authorizing.

Example 1, the AaaML NF/NEF queries input and output parameters corresponding to the type of the service message of the AI/ML AF according to the AI/ML service profile. If the input and output parameters corresponding to the type of the service message involve user privacy or require user consent, the AaaML NF/NEF determines that the user consent is required before authorizing. The scope of whether user privacy is involved or user consent is required is defined in accordance with local laws and regulations (i.e., in this example, the AaaML NF/NEF determines whether the requested data involves privacy).

Example 2, the AaaML NF/NEF operates a mapping table that stores mapping relationships between AaaML service profiles and the existing 5GC services, where the 5GC services may include user consent check. (i.e., in this example, the AaaML NF/NEF determines whether user consent check is required by querying the service requested by the AF).

If the AaaML NF/NEF determines that the user consent is required before authorizing, step 3 will be executed; otherwise, it will skip directly to the subsequent authorization check. The authorization check process includes two cases, one including step 6 and another including steps 7 to 9.

Step 3. The AaaML NF/NEF checks whether corresponding user consent parameters are stored locally based on the UE ID (SUPI, GPSI) or group ID (a group of SUPIs, a group of GPSIs) transmitted by AF. If the AaaML AF/NEF does not store the corresponding user consent parameters locally, the AaaML AF/NEF initiates a request for the user consent parameters to the UDM. For example, the AaaML NF/NEF transmits an Nudm_SDM_Get request to the UDM, which includes a request name "user consent" and the UE ID (SUPI, GPSI) or group ID (a group of SUPIs, a group of GPSIs). If the AaaML AF/NEF stores the corresponding user consent parameters locally, the query process for the UDM in the process will be omitted, and the process will be skipped to step 5.

Step 4. The UDM returns a response of the user consent parameters to the AaaML NF/NEF. For example, UDM returns an Nudm_SDM_Get response to the AaaML NF/NEF, which includes user consent parameters corresponding to the SUPI or group ID; the AaaML NF/NEF stores the received user consent parameters for later use.

Step 5. The AaaML NF/NEF checks the user consent parameters. For example, the AaaML NF/NEF checks whether the UE involved in the service message consents to processing its user data by the third party according to the user consent parameters.

In the embodiments of the present application, the user consent information may include user consent information corresponding to the identifiers of multiple users (e.g., UE ID, SUPI or GPSI) and/or a group identifier (e.g., a group of UE IDs, a group of SUPIs or a group of GPSIs), and the user consent information may include at least one of: a purpose of data processing, a data type, and a data fine granularity. The user consent information may also be called user license information, user agreement parameter, user license parameter, user consent parameters, etc.

In an example, the forms of user consent parameters are shown in Table 2 below.

**Table 2**

| UE ID | Purpose of data processing | Data Type | Data fine granularity |
|---|---|---|---|
| SUPI or GPSI | Collecting | Location Information | granularity of TA/cell |
| SUPI or GPSI | Analysing | | |
| SUPI or GPSI | Providing an analysis result to the third party application | | AF ID |

Taking 5GC-assisting federated learning (FL) as an example, in the embodiments of the present application, the service message may include requesting a data analysis result for a user device from a network data analytics function (NWDAF). For example, the AF subscribes to the UE mobility analysis of the NWDAF, to determine whether the UE moves out of the area of Interest (AoI); or the AF subscribes to the network performance analysis of the UE in the AoI, to determine when it is appropriate to train an ML model for the UE in the AoI.

The AaaML NF/NEF receives a service message from the AF, and the service message includes requesting a data analysis result for the user equipment from the NWDAF, for example, AF requests FL members selection and geographic location distribution information of candidate members from the AIML NF/NEF; the AaaML NF/NEF checks the user consent parameters of the UE involved in the service message for the service message (as shown in Table 2 above). If the UE involved in the service message allows providing the analysis result to a third party, and allows providing the analysis result to the AF, the check for the user consent of the service message by the AaaML NF/NEF is successful, and the AaaML NF/NEF further performs the authorization check for the service requested by the AI/ML AF, such as executing step 6, or executing steps 7 to 9.

If the user consent check for the service message of the AI/ML AF by the AaaML NF/NEF fails, the AaaML NF/NEF returns a request failure response to the AI/ML AF. The request failure response may include a failure reason, such as the failure reason being that the check for user agreement or user permission or user consent failure.

Step 6. The AaaML NF/NEF authorizes the service requested by AI/ML AF. The authorization is an authorization of the CAPIF-2e interface, for example, authorization is performed using Method one or Method two for CAPIF-2e interface authorization in the related technologies.

Specifically, the AaaML NF/NEF checks whether authorization information of the AI/ML AF is available locally; if the authorization information is available locally, local configuration is queried to authorize the service message of the AI/ML AF; if the authorization information is not available locally, an authorization information request is transmitted to the CAPIF core function, which may include an AI/ML AF identifier and a service name requested by the AI/ML AF. The CAPIF core function checks and returns the authorization information of the AI/ML AF to the AaaML NF/NEF. Further, the AaaML NF/NEF checks the authorization information of the AI/ML AF, to perform the authorization check for the service message of the AI/ML AF. If the authorization check for the service message of the AI/ML AF is successful, step 10 continues to be executed.

In an example, service authorization information of the AI/ML AF is shown in Table 3.

**Table 3**

| AIML AF identifier | AIML Service Name | Service authorization expiration period | Other Content |
|---|---|---|---|
| AF ID/ client ID | NaaaML_CandidateUE Selection | | (Detailed information of the contractual authorization between the AF and the operator may be included) |
| | NaaaML_NWDAFAna-lyticsCollection | | |

Step 7. If authorization is performed using Method three for the authorization of the CAPIF-2e interface in the related technologies, the CAPIF core function may generate an access token (access_token) according to the authorization information, and provide the access_token and the expiration period (exp) of the access token to the AI/ML AF. The access token may include a user consent check result for the service message of the AI/ML AF, and the user consent check result may be transmitted by the AaaML NF/NEF to the CAPIF core function.

In an example, the access token is shown in Table 4 below.

**Table 4**

| Parameters | Describe |
|---|---|
| AF ID/ client ID | identifier of the AF (API invoker) |
| Expiration time (Exp) | Expiration time of an access token |
| | Note: after the user consent is cancelled, the associated access token becomes invalid |
| Scope | Including a space-separated list of a character string, which is composed of the following action fields associated with the token: - a service list of each AEF (such as "AEF1: Service1, Service2, Service3, ..., ServiceX; AEF2: Service1, Service2, Service3, ..., ServiceZ") |
| Additional Scope | A result of the user consent check for each specific service, either success or failure |

AaaML NF/NEF, where the service message includes the access token (access_token).

Step 9. The AaaML NF/NEF verifies the access token to check whether the AI/ML AF is authorized to access the requested AI/ML service. If the verification is successful, the AaaML NF/NEF may request access authorization from the network repository function (NRF), where the access authorization may include information such as an NF service producer, an NF type, an AF, or client identifier (ID).

Step 10. After authorization is successful, the AaaML NF/NEF may invoke a series of authorized 5GC services and return a service response to the AF, e.g., feeding back Nnef_<Service-Y> Response or NaaaML_<Service-Y> Response to the AI/ML AF.

As shown in Table 4 above, the access token received by the AaaML NF/NEF may include the result of the user consent check for each specific service. As the enforcement point of the user consent check, the AaaML NF/NEF may subscribe to user consent parameter change notification of the UDM. If user consent parameters of a certain user changes subsequently, the UDM may transmit user consent parameter change notification of the user to the relevant AaaML NF/NEF. For example, the user consent parameter change notification may carry user consent cancelling information for one or some user requests from the user.

According to the user consent cancelling information, even if the access token of the service requested by AF is valid, the user consent related to the access token is cancelled, the AaaML NF/NEF will execute the cancelling of user consent, to set the access token as invalid, and not execute the request from the AF using the invalid token, or return a request failure response to the AF after receiving such a request, where the request failure response may include a failure reason (e.g., user consent check failure).

Example two: performing User Consent check after the CAPIF authorization.

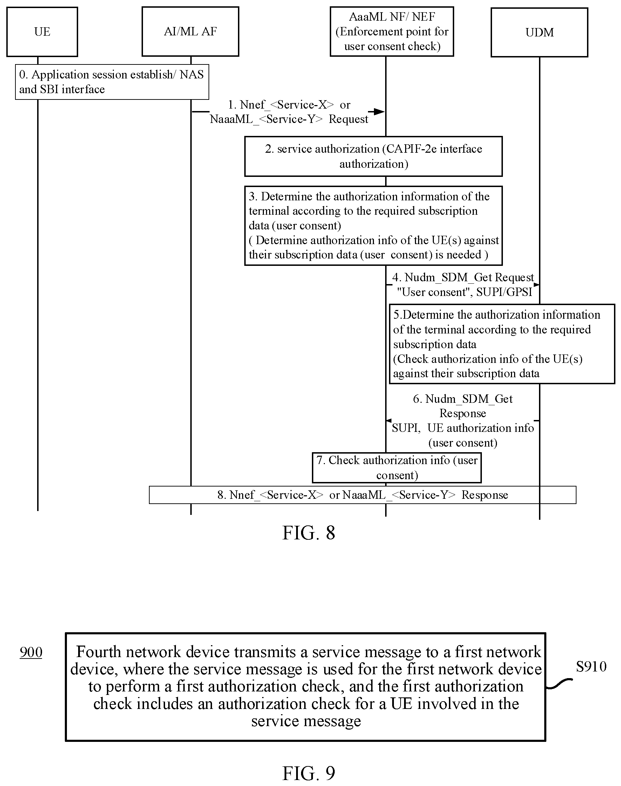

FIG. 8 is an implementation flowchart of an authorization method of an embodiment of the present application, including the following contents.

Step 1. The AI/ML AF transmits a service message to the AaaML NF/NEF, for example, transmitting a NaaaML__<Service-X>Request message or Nnef_<Service-X> Request message. The service message may include a data processing preference to facilitate checking and determining user consent.

Step 2. The AaaML NF/NEF authorizes the service requested by AI/ML AF. The authorization is an authorization of the CAPIF-2e interface, for example, authorization is performed using Method one, Method two or Method three for the CAPIF-2e interface authorization in the related technologies. After the service authorization requested by the AI/ML AF is successful, step 3 continues to be executed.

Step 3. The AaaML/NEF may act as an enforcement point for user consent check. According to the service type requested by the AI/ML AF, the AaaML/NEF determines whether to determine the authorization information of the terminal according to the required subscription data (e.g., user consent), that is, the AaaML/NEF determines whether a first authorization check is required for the service message, to determine whether the UE involved in the service message allows a third party to process its user data.

If the first authorization check is required, the AaaML NF/NEF checks whether the corresponding user consent parameters are stored locally based on the UE ID (SUPI, GPSI) or group ID (a group of SUPIs, a group of GPSIs) in the request transmitted by the AI/ML AF. If the AaaML AF/NEF does not store the corresponding user consent parameters locally, step 4 will be executed; if the AaaML AF/NEF stores the corresponding user consent locally, the query process for the UDM in the process will be omitted, and the process will be skipped to step 7.

If the first authorization check is not required, the authorization check for the service message of the AI/ML AF by the AaaML NF/NEF is successful, and the process will be skipped to step 8.

Step 4. The AaaML AF/NEF initiates a request for the user consent parameters to the UDM. For example, the AaaML NF/NEF transmits an Nudm_SDM_Get request to the UDM, which includes a request name "user consent" and the UE ID (SUPI, GPSI) or group ID (a group of SUPIs, a group of GPSIs).

Step 5. The UDM checks the subscription information according to the identifier of the UE or group identifier, e.g., checking the user consent of the UE.

Step 6. The UDM returns the subscription information to the AaaML NF/NEF. For example, UDM returns an Nudm_SDM_Get response to the AaaML NF/NEF, which includes the authorization information (e.g., user consent parameters) corresponding to the SUPI or group ID; the AaaML NF/NEF stores the received authorization information (e.g., user consent parameters) for later use.

Step 7. The AaaML NF/NEF checks the authorization information (e.g., user consent parameters) and authorizes the service requested by the AI/ML AF. For example, the AaaML NF/NEF checks whether the UE involved in the service message consents to processing its user data by the third party according to the user consent parameters.

The mode of which the AaaML NF/NEF performs the authorization check according to the user consent parameters may refer to the relevant content in the above Example one, which will not be repeated here. If the authorization check is successful, step 8 continues to be executed.

Step 8. The AIML NF/NEF may invoke a series of authorized 5GC services and return a service response to the AF, e.g., Nnef_<Service-X> Response or NaaaML_<Service-X> Response.

Regarding a case of authorizing the service requested by the AI/ML AF by Method three for the CAPIF-2e interface authorization in step 2, similar to Example one above, as the enforcement point of the user consent check, the AaaML NF/NEF may subscribe to user consent parameter change notification of the UDM. If user consent parameters of a certain user changes subsequently, the UDM may transmit user consent parameter change notification of the user to the relevant AaaML NF/NEF. For example, the user consent parameter change notification may carry user consent cancelling information for one or some user requests from the user.

According to the user consent cancelling information, even if the access token of the service requested by AF is valid, the user consent related to the access token is cancelled, the AaaML NF/NEF will execute the cancelling of user consent, to set the access token as invalid, and not execute the request from the AF using the invalid token, or return a request failure response to the AF after receiving such a request, where the request failure response may include a failure reason (e.g., user consent check failure).

It can be seen that, in the authorization method proposed in the embodiments of the present application, a security function is adds to the AaaML NF/NEF. The AaaML NF/NEF may act as the enforcement point for user consent, to perform user consent check and cancelling. In an example, the user consent check may be combined with other authorization processes, for example, adding relevant parameters of user consent to the access token. In some examples, the user consent information may be in the authorization information stored in the UDM, that is, the user consent is a type of authorization information in the UDM. The authorization method corresponding to the embodiments of the present application may be used for authorization of AI/ML service message, e.g., authorization under the NWDAF use case.

The AaaML NF proposed in the embodiments of the present application may be deployed as an independent network element, or may be deployed as a network function in conjunction with the NEF, or in conjunction with NWDAF, which is not limited in the present application. The UE involved in the embodiments of the present application may be a UE or a group of UEs.

The embodiments of the present application further propose an authorization method. FIG. 9 is a schematic flowchart of an authorization method 900 according to the embodiments of the present application. The method may be applied to the system illustrated in FIG. 1 or FIG. 2, but is not limited thereto. The method includes at least part of the following content.

S910, a fourth network device transmits a service message to a first network device, where the service message is used for the first network device to perform a first authorization check, and the first authorization check includes an authorization check for a terminal device involved in the service message.

In some implementations, the first authorization check includes: a check for user consent and/or first service authorization of the terminal device involved in the service message.

In some implementations, the user consent of the terminal device is used to indicate whether the terminal device consents to processing user data of the terminal device.

In some implementations, the first service authorization is used to indicate whether the terminal device is authorized to use a first service, and/or indicate a type of the first service that the terminal device is authorized to use.

In some implementations, the first service includes an AI/ML service.

In some implementations, the AI/ML service includes at least one of: selecting terminal device members, collecting an analysis result for the terminal device, and downloading an AI/ML model.

In some implementations, the user consent includes at least one of: a purpose of data processing, a data type, and a data fine granularity.

In some implementations, the method further includes that the fourth network device receives a first authorization check result from the first network device.

In some implementations, the fourth network device receiving the first authorization check result from the first network device includes:
receiving, by the fourth network device, a service message failure response from the first network device, where the service message failure response includes first authorization check failure information.

In some implementations, the method further includes that the fourth network device receives an access token from the third network device, and transmits the access token to the first network device; where
the access token includes the first authorization check result, and the access token is generated by the third network device after performing a second authorization check on the service message, and second authorization includes authorization of the service message by a core network.

In some implementations, the first network device includes an AaaML NF or an NEF.

In some implementations, the fourth network device includes an AI/ML AF.

In some implementations, the third network device includes a CAPIF core function or an NRF.

For other details of the authorization method of the present embodiments may be referred to the relevant introduction of the fourth network device in the aforementioned embodiments, which will not be repeated here.

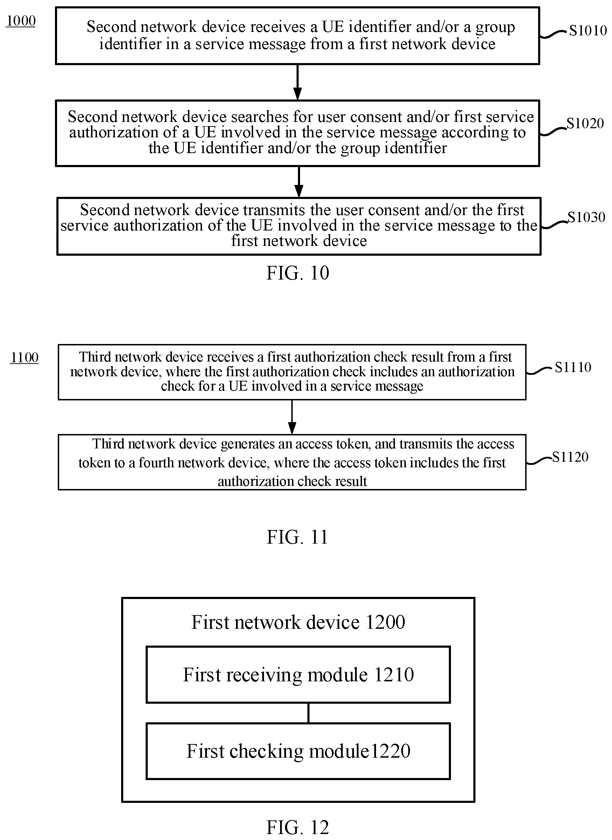

The embodiments of the present application further propose an authorization method. FIG. 10 is a schematic flowchart of an authorization method 1000 according to the embodiments of the present application. The method may be applied to the system illustrated in FIG. 1 or FIG.2, but is not limited thereto. The method includes at least part of the following content.

S1010, a second network device receives a terminal device identifier and/or a group identifier in a service message from a first network device.

S1020, the second network device searches for user consent and/or first service authorization of a terminal device involved in the service message according to the terminal device identifier and/or the group identifier.

S1030, the second network device transmits the user consent and/or the first service authorization of the terminal device involved in the service message to the first network device.

In some implementations, the user authorization parameter information includes: user consent parameters corresponding to multiple user identifiers and/or group identifiers, where the user consent parameters include at least one of: a purpose of data processing, a data type, and a data fine granularity.

In some implementations, the user consent of the terminal device is used to indicate whether the terminal device consents to processing user data of the terminal device.

In some implementations, the first service authorization is used to indicate whether the terminal device is authorized to use a first service, and/or indicate a type of the first service that the terminal device is authorized to use.

In some implementations, the first service includes an AI/ML service. In some implementations, the AI/ML service includes at least one of: selecting terminal device members, collecting an analysis result for the terminal device, and downloading an AI/ML model.

In some implementations, the method further includes that the second network device transmit user consent cancelling information of the terminal device involved in the service message to the first network device.

In some implementations, the first network device includes an AaaML NF or an NEF.

In some implementations, the second network device includes a UDM.

For other details of the authorization method of the present embodiments may be referred to the relevant introduction of the second network device in the aforementioned embodiments, which will not be repeated here.

The embodiments of the present application further propose an authorization method. FIG. 11 is a schematic flowchart of an authorization method 1100 according to the embodiments of the present application. The method may be applied to the system illustrated in FIG. 1 or FIG. 2, but is not limited thereto. The method includes at least part of the following content.

S1110, a third network device receives a first authorization check result from a first network device, where the first authorization check includes an authorization check for a terminal device involved in a service message.

S1120, the third network device generates an access token, and transmits the access token to a fourth network device, where the access token includes the first authorization check result.

In some implementations, the first authorization check includes a check for user consent and/or first service authorization of the terminal device involved in the service message.

In some implementations, the user consent of the terminal device is used to indicate whether the terminal device consents to processing user data of the terminal device.

In some implementations, the first service authorization is used to indicate whether the terminal device is authorized to use a first service, and/or indicate a type of the first service that the terminal device is authorized to use.

In some implementations, the first service includes an AI/ML service.

In some implementations, the AI/ML service includes at least one of: selecting terminal device members, collecting an analysis result for the terminal device, and downloading an AI/ML model.

In some implementations, the access token is generated by the third network device after performing a second authorization check on the service message of the fourth network device; where
second authorization includes authorization of the service message by a core network.

In some implementations, the first network device includes an AaaML NF or an NEF.

In some implementations, the third network device includes a CAPIF core function or an NRF.

For other details of the authorization method of the present embodiment may be referred to the relevant introduction of the third network device in the aforementioned embodiments, which will not be repeated here.

The embodiments of the present application further provide a first network device. FIG. 12 is a schematic diagram of a structure of a first network device 1200 according to the embodiments of the present application, where the first network device 1200 includes:
a first receiving module 1210, configured to receive a service message; and
a first checking module 1220, configured to perform a first authorization check on the service message, where the first authorization check includes an authorization check for a terminal device involved in the service message.

In some implementations, the first authorization check includes:
a check for user consent and/or first service authorization of the terminal device involved in the service message.

In some implementations, the user consent of the terminal device is used to indicate whether the terminal device consents to processing user data of the terminal device. In some implementations, the first service authorization is used to indicate whether the terminal device is authorized to use a first service, and/or indicate a type of the first service that the terminal device is authorized to use.

In some implementations, the first service includes an AI/ML service.

In some implementations, the AI/ML service includes at least one of: selecting terminal device members, collecting an analysis result for the terminal device, and downloading an AI/ML model.

In some implementations, the first checking module 1220 is configured to:
determine whether the first authorization check is required for the service message according to a type and/or a parameter of the service message; and if the first authorization check is required for the service message, perform the first authorization check on the service message.

In some implementations, the first checking module 1220 is configured to:
obtain the user consent and/or the first service authorization of the terminal device involved in the service message; and
perform verification on the user consent and/or the first service authorization, and determine, according to the verification result, whether the terminal device involved in the service message consents to processing the user data of the terminal device, and/or whether the terminal device involved in the service message is authorized to use a service corresponding to the service message.

In some implementations, the first checking module 1220 is configured to:
search for the user consent and/or the first service authorization of the terminal device involved in the service message according to a terminal device identifier and/or a group identifier in the service message.

In some implementations, the first checking module 1220 is configured to:
transmit a terminal device identifier and/or group identifier in the service message to a second network device; and
receive the user consent and/or the first service authorization of the terminal device involved in the service message from the second network device.

In some implementations, the user consent and/or the first service authorization of the terminal device involved in the service message is obtained by searching by the second network device according to the terminal device identifier and/or group identifier.

In some implementations, the user consent includes at least one of: a purpose of data processing, a data type, and a data fine granularity.

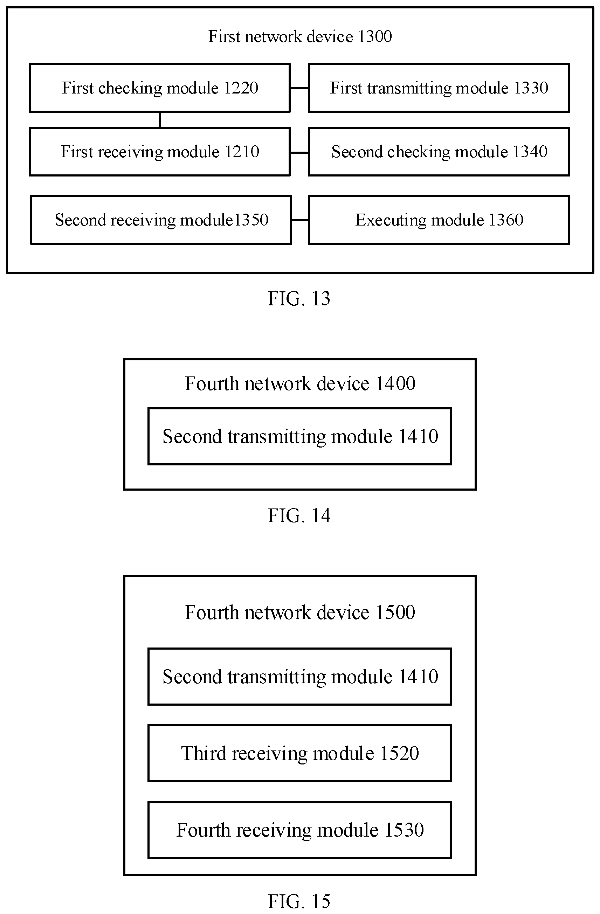

FIG. 13 is a schematic diagram of a structure of a first network device 1300 according to the embodiments of the present application. The first network device 1300 includes one or more features in the embodiments of the first network device 1200. In a possible implementation, in the embodiments of the present application, the first network device 1300 further includes:
a first transmitting module 1330, configured to transmit a service message failure response in a case where the first authorization check for the service message fails, where the service message failure response includes first authorization check failure information.

In some implementations, the first network device 1300 further includes:
a second checking module 1340, configured to perform a second authorization check for the service message, where second authorization includes authorization of the service message by a core network

In some implementations, the second checking module 1340 is configured to:
in a case where the first authorization check for the service message is successful, transmit, by the first network device, a first authorization check result to a third network device;
receive, by the first network device, an access token, where the access token includes the first authorization check result, where the access token is generated by the third network device after performing the second authorization check on the service message.

In some implementations, the access token and the service message are transmitted by a fourth network device.

In some implementations, the access token further includes expiration time.

In some implementations, the first network device 1300 further includes:
a second receiving module 1350, configured to receive user consent cancelling information of the terminal device involved in the service message from the second network device; and
an executing module 1360, configured to perform at least one of the following operations according to the user consent cancelling information:
   setting the access token as invalid; and
   transmitting the service message failure response, where the service message failure response includes first authorization check failure information.

In some implementations, the second checking module 1340 is configured to:
obtain second authorization information corresponding to the service message; and
perform the second authorization check on the service message according to the second authorization information corresponding to the service message.

In some implementations, the second checking module 1340 is configured to:
search, by the first network device, for the second authorization information corresponding to the service message stored locally.

In some implementations, the second checking module 1340 is configured to:
transmit a network device identifier and/or service name of the service message to the third network device; and
receive the second authorization information corresponding to the service message from the third network device, and the second authorization information corresponding to the service message is obtained by searching by the third network device according to the network device identifier and/or service name.

In some implementations, the first network device includes an AaaML NF or an NEF.

In some implementations, the second network device includes a UDM.

In some implementations, the third network device includes a CAPIF core function or an NRF.

In some implementations, the fourth network device includes an AI/ML AF.

It should be understood that the above and other operations and/or functions of the modules in the first network device according to the embodiments of the present application are respectively for implementing the corresponding processes of the first network device in the method 400 of FIG. 4, which will not be repeated here for the sake of brevity.

The embodiments of the present application further provide a fourth network device. FIG. 14 is a schematic diagram of a structure of a fourth network device 1400 according to the embodiments of the present application, where the fourth network device 1400 includes:
a second transmitting module 1410, configured to transmit a service message to a first network device, where the service message is used for the first network device to perform a first authorization check, and the first authorization check includes an authorization check for a terminal device involved in the service message.

In some implementations, the first authorization check includes:
a check for user consent and/or first service authorization of the terminal device involved in the service message.

In some implementations, the user consent of the terminal device is used to indicate whether the terminal device consents to processing user data of the terminal device.

In some implementations, the first service authorization is used to indicate whether the terminal device is authorized to use a first service, and/or indicate a type of the first service that the terminal device is authorized to use.

In some implementations, the first service includes an AI/ML service.

In some implementations, the AI/ML service includes at least one of: selecting terminal device members, collecting an analysis result for the terminal device, and downloading an AI/ML model.

In some implementations, the user consent includes at least one of: a purpose of data processing, a data type, and a data fine granularity.

FIG. 15 is a schematic diagram of a structure of a fourth network device 1500 according to the embodiments of the present application. The fourth network device 1500 includes one or more features in the embodiments of the fourth network device 1400. In a possible implementation, in the embodiments of the present application, the fourth network device 1500 further includes:
a third receiving module 1520, configured to receive a first authorization check result from the first network device.

In some implementations, the third receiving module 1520 is configured to:
receive a service message failure response from the first network device, where the service message failure response includes first authorization check failure information.

In some implementations, the fourth network device 1500 further includes:
a fourth receiving module 1530, configured to receive an access token from the third network device, and transmit the access token to the first network device;
where the access token includes the first authorization check result, and the access token is generated by the third network device after performing a second authorization check on the service message, and second authorization includes authorization of the service message by a core network.

In some implementations, the first network device includes an AaaML NF or an NEF.

In some implementations, the fourth network device includes an AI/ML AF.

In some implementations, the third network device includes a CAPIF core function or an NRF.

It should be understood that the above and other operations and/or functions of the modules in the fourth network device according to the embodiments of the present application are respectively for implementing the corresponding processes of the fourth network device in the method 900 of FIG. 9, which will not be repeated here for the sake of brevity.

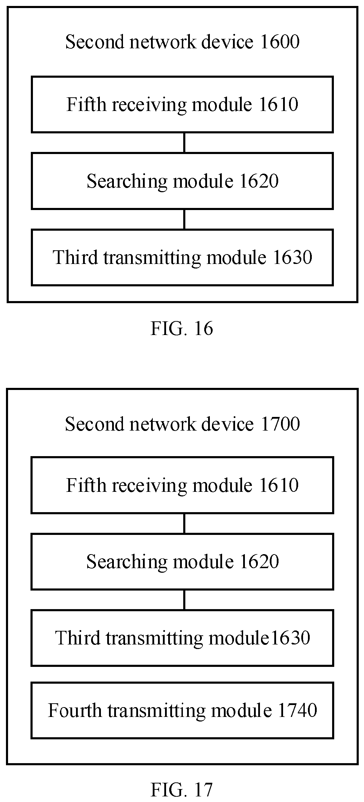

The embodiments of the present application further provide a second network device. FIG. 16 is a schematic diagram of a structure of a second network device 1600 according to the embodiments of the present application, where the second network device 1600 includes:
a fifth receiving module 1610, configured to receive a terminal device identifier and/or a group identifier in a service message from a first network device;
a searching module 1620, configured to search for user consent and/or first service authorization of a terminal device involved in the service message according to the terminal device identifier and/or the group identifier; and
a third transmitting module 1630, configured to transmit the user consent and/or the first service authorization of the terminal device involved in the service message to the first network device.

In some implementations, the user authorization parameter information includes:
user consent parameters corresponding to multiple user identifiers and/or group identifiers, where the user consent parameters include at least one of: a purpose of data processing, a data type, and a data fine granularity.

In some implementations, the user consent of the terminal device is used to indicate whether the terminal device consents to processing user data of the terminal device.

In some implementations, the first service authorization is used to indicate whether the terminal device is authorized to use a first service, and/or indicate a type of the first service that the terminal device is authorized to use.

In some implementations, the first service includes an AI/ML service.

In some implementations, the AI/ML service includes at least one of: selecting terminal device members, collecting an analysis result for the terminal device, and downloading an AI/ML model.

FIG. 17 is a schematic diagram of a structure of a second network device 1700 according to the embodiments of the present application. The second network device 1700 includes one or more features in the embodiments of the second network device 1600. In a possible implementation, in the embodiments of the present application, the second network device 1700 further includes:
a fourth transmitting module 1740, configured to transmit user consent cancelling information of the terminal device involved in the service message to the first network device.

In some implementations, the first network device includes an AaaML NF or an NEF.

In some implementations, the second network device includes a UDM.

It should be understood that the above and other operations and/or functions of the modules in the second network device according to the embodiments of the present application are respectively for implementing the corresponding processes of the second network device in the method 1000 of FIG. 10, which will not be repeated here for the sake of brevity.

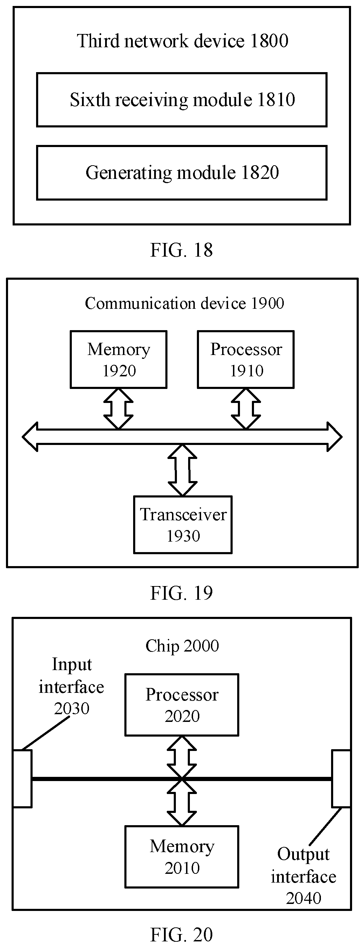

The embodiments of the present application further provide a third network device. FIG. 18 is a schematic diagram of a structure of a third network device 1800 according to the embodiments of the present application, where the third network device 1800 includes:
a sixth receiving module 1810, configured to receive a first authorization check result from a first network device, where the first authorization check includes an authorization check for a terminal device involved in a service message; and
a generating module 1820, configured to generate an access token, and transmit the access token to a fourth network device, where the access token includes the first authorization check result.

In some implementations, the first authorization check includes:
a check for user consent and/or first service authorization of the terminal device involved in the service message.

In some implementations, the user consent of the terminal device is used to indicate whether the terminal device consents to processing user data of the terminal device.

In some implementations, the first service authorization is used to indicate whether the terminal device is authorized to use a first service, and/or indicate a type of the first service that the terminal device is authorized to use.

In some implementations, the first service includes an AI/ML service.

In some implementations, the AI/ML service includes at least one of: selecting terminal device members, collecting an analysis result for the terminal device, and downloading an AI/ML model.

In some implementations, the access token is generated by the third network device after performing a second authorization check on the service message of the fourth network device; where
the second authorization includes authorization of the service message by a core network.

In some implementations, the first network device includes an AaaML NF or an NEF.

In some implementations, the third network device includes a CAPIF core function or an NRF.

It should be understood that the above and other operations and/or functions of the modules in the third network device according to the embodiments of the present application are respectively for implementing the corresponding processes of the third network device in the method 1100 of FIG. 11, which will not be repeated here for the sake of brevity.

It should be noted that the functions described in the various modules (sub-modules, units or components, etc.) in the communication device in the embodiments of the present application may be implemented by different modules (sub-modules, units or components, etc.) or by the same module (sub-modules units or component, etc.). For example, the first receiving module and the second receiving module may be different modules or the same module, and both may implement the corresponding functions in the embodiments of the present application. In addition, the transmitting modules and the receiving modules in the embodiments of the present application may be implemented by the transceiver of the device, and part or all of the remaining modules may be implemented by the processor of the device.

FIG. 19 is a schematic structural diagram of a communication device 1900 according to the embodiments of the present application. The communication device 1900 illustrated in FIG. 19 includes a processor 1910, and the processor 1910 may call a computer program from a memory, and run the computer program, to implement the methods in the embodiments of the present application.

In some implementations, as shown in FIG. 19, the communication device 1900 may further include a memory 1920. The processor 1910 may call a computer program from the memory 1920, and run the computer program, to implement the communication device in the embodiments of the present application.

The memory 1920 may be a separate device independent from the processor 1910, or may be integrated into the processor 1910.

In some implementations, as shown in FIG. 19, the communication device 1900 may further include a transceiver 1930, and the processor 1910 may control the transceiver 1930 to communicate with other devices, and specifically, to transmit information or data to other devices, or receive information or data transmitted by other devices.

The transceiver 1930 may include a transmitter and a receiver. The transceiver 1930 may further include antenna(s), and the number of antenna(s) may be one or more.

In some implementations, the communication device 1900 may be the communication device in the embodiments of the present application, and the communication device 1900 may implement the corresponding procedure implemented by the communication device in the various methods of the embodiments of the present application, which will not be repeated here for brevity.

FIG. 20 is a schematic structural diagram of a chip 2000 according to the embodiments of the present application. The chip 2000 illustrated in FIG. 20 includes a processor 2010, and the processor 2010 may call a computer program from a memory and run the computer program, to implement the methods in the embodiments of the present application.

In some implementations, as shown in FIG. 20, the chip 2000 may further include a memory 2020. The processor 2010 may call a computer program from the memory 2020 and run the computer program, to implement the methods in the embodiments of the present application.

The memory 2020 may be a separate device independent from the processor 2010, or may be integrated into the processor 2010.

In some implementations, the chip 2000 may further include an input interface 2030. The processor 2010 may control the input interface 2030 to communicate with other devices or chips, and specifically, the input interface 2030 may obtain information or data transmitted by other devices or chips.

In some implementations, the chip 2000 may further include an output interface 2040. The processor 2010 may control the output interface 2040 to communicate with other devices or chips, and specifically, the output interface 2040 may output information or data to other devices or chips.

In some implementations, the chip may be applied to the communication device in the embodiments of the present application, and the chip may implement the corresponding procedure implemented by the network device in the various methods of the embodiments of the present application, which will not be repeated here for brevity.

It should be understood that the chip mentioned in the embodiments of the present application may also be called a system-level chip, a system chip, a chip system or a system-on-chip chip, etc.

The above processor may be a general-purpose processor, a digital signal processor (DSP), a field programmable gate array (FPGA), an application specific integrated circuit (ASIC) or other programmable logic devices, transistor logic devices, discrete hardware components, etc. The general-purpose processor may be a microprocessor, or any conventional processor, etc.

The memory may be a volatile (transitory) memory or a non-volatile (non-transitory) memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM).

It should be understood that the above memory is exemplary but not limiting illustration, e.g., the memory in embodiments of the present application may further be a static random access memory (static RAM, SRAM), a dynamic random access memory (dynamic RAM, DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present application is intended to include, but not limited to, these and any other suitable types of memories.

The above embodiments may be implemented in whole or in part through software, hardware, firmware, or any combination thereof. When implemented by using a software program, the embodiments may be implemented in a form of a computer program product in whole or in part. The computer program product includes one or more computer instructions. When the computer program instructions are loaded on and executed by a computer, processes or functions described in the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It can be understood that, in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the system, the apparatus and the unit described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. An authorization method, comprising:
receiving, by a first network device, a service message; and
performing, by the first network device, a first authorization check on the service message, wherein the first authorization check comprises an authorization check for a user equipment, UE, involved in the service message.

2. The method according to claim 1, wherein the first authorization check comprises:
a check for user consent and/or first service authorization of the UE involved in the service message.

3. The method according to claim 2, wherein the user consent of the UE is used to indicate whether the consent has been granted to processing user data of the UE.

4. The method according to claim 2, wherein the first service authorization is used to indicate whether the UE is authorized to use a first service, and/or indicate a type of the first service that the UE is authorized to use.

5. The method according to claim 4, wherein the first service comprises an artificial intelligence (AI)/machine learning (ML) service.

6. The method according to claim 5, wherein the AI/ML service comprises at least one of: selecting UE members, collecting an analysis result for the UE, and downloading an AI/ ML model.

7. The method according to any one of claims 1 to 6, wherein performing, by the first network device, the first authorization check on the service message comprises:
determining, by the first network device according to a type and/or a parameter of the service message, whether the first authorization check is required for the service message; and if the first authorization check is required for the service message, performing the first authorization check on the service message.

8. The method according to any one of claims 2 to 6, wherein performing, by the first network device, the first authorization check for the service message comprises:
obtaining, by the first network device, the user consent and/or the first service authorization of the UE involved in the service message; and
performing, by the first network device, verification on the user consent and/or the first service authorization, and determining, according to a verification result, whether the UE involved in the service message consents to processing the user data of the UE, and/or whether the UE involved in the service message is authorized to use a service corresponding to the service message.

9. The method according to claim 8, wherein obtaining, by the first network device, the user consent and/or the first service authorization of the UE involved in the service message comprises:
searching, by the first network device according to a UE identifier and/or a group identifier in the service message, for the user consent and/or the first service authorization of the UE involved in the service message.

10. The method according to claim 8, wherein obtaining, by the first network device, the user consent and/or the first service authorization of the UE involved in the service message comprises:
transmitting, by the first network device, a UE identifier and/or group identifier in the service message to a second network device; and
receiving, by the first network device, the user consent and/or the first service authorization of the UE involved in the service message from the second network device.

11. The method according to claim 10, wherein the user consent and/or the first service authorization of the UE involved in the service message is obtained by searching by the second network device according to the UE identifier and/or group identifier.

12. The method according to any one of claims 2 to 6, and 8 to 11, wherein the user consent comprises at least one of: a purpose of data processing, a data type, and data fine granularity.

13. The method according to any one of claims 1 to 12, further comprising:
in a case where the first authorization check for the service message fails, transmitting a service message failure response, wherein the service message failure response comprises first authorization check failure information.

14. The method according to any one of claims 1 to 12, further comprising:
performing, by the first network device, a second authorization check for the service message, wherein second authorization comprises authorization of the service message by a core network.

15. The method according to claim 14, wherein performing, by the first network device, the second authorization check on the service message comprises:
in a case where the first authorization check for the service message is successful, transmitting, by the first network device, a first authorization check result to a third network device; and
receiving, by the first network device, an access token, wherein the access token comprises the first authorization check result, wherein the access token is generated by the third network device after performing the second authorization check on the service message.

16. The method according to claim 15, wherein the access token and the service message are transmitted by a fourth network device.

17. The method according to claim 15 or 16, wherein the access token further comprises expiration time.

18. The method according to claim 17, further comprising:
receiving, by the first network device, user consent cancelling information of the UE involved in the service message from the second network device; and
performing, by the first network device according to the user consent cancelling information, at least one of following operations:
setting the access token as invalid; and
transmitting the service message failure response, wherein the service message failure response comprises first authorization check failure information.

19. The method according to claim 14, wherein performing, by the first network device, the second authorization check on the service message comprises:
obtaining, by the first network device, second authorization information corresponding to the service message; and
performing, by the first network device according to the second authorization information corresponding to the service message, the second authorization check on the service message.

20. The method according to claim 19, wherein obtaining, by the first network device, the second authorization information corresponding to the service message comprises:
searching, by the first network device, for the second authorization information corresponding to the service message stored locally.

21. The method according to claim 19, wherein obtaining, by the first network device, the second authorization information corresponding to the service message comprises:
transmitting, by the first network device, a network device identifier and/or service name of the service message to the third network device; and
receiving, by the first network device, the second authorization information corresponding to the service message from the third network device, and the second authorization information corresponding to the service message is obtained by searching by the third network device according to the network device identifier and/or service name.

22. The method according to any one of claims 1 to 21, wherein the first network device comprises an application AI/ML assistance network function (AaaML NF) or a network exposure function (NEF).

23. The method according to claim 10, 11 or 18, wherein the second network device comprises a unified data management (UDM).

24. The method according to any one of claims 15 to 18, and 21, wherein the third network device comprises a common application programming interface framework (CAPIF) core function or a network repository function (NRF).

25. The method according to claim 16, wherein the fourth network device comprises an AI/ML application function (AF).

26. An authorization method, comprising:
transmitting, by a fourth network device, a service message to a first network device, wherein the service message is used for the first network device to perform a first authorization check, and the first authorization check comprises an authorization check for a UE involved in the service message.

27. The method according to claim 26, wherein the first authorization check comprises:
a check for user consent and/or first service authorization of the UE involved in the service message.

28. The method according to claim 27, wherein the user consent of the UE is used to indicate whether the consent has been granted to processing user data of the UE.

29. The method according to claim 27, wherein the first service authorization is used to indicate whether the UE is authorized to use a first service, and/or indicate a type of the first service that the UE is authorized to use.

30. The method according to claim 29, wherein the first service comprises an AI/ML service.

31. The method according to claim 30, wherein the AI/ML service comprises at least one of: selecting UE members, collecting an analysis result for the UE, and downloading an AI/ML model.

32. The method according to any one of claims 27 to 31, wherein the user consent comprises at least one of: a purpose of data processing, a data type, and data fine granularity.

33. The method according to any one of claims 26 to 32, further comprising:
receiving, by the fourth network device, a first authorization check result from the first network device.

34. The method according to claim 33, wherein receiving, by the fourth network device, the first authorization check result from the first network device comprises:
receiving, by the fourth network device, a service message failure response from the first network device, wherein the service message failure response comprises first authorization check failure information.

35. The method according to any one of claims 26 to 32, further comprising:
receiving, by the fourth network device, an access token from the third network device, and transmitting the access token to the first network device;
wherein the access token comprises the first authorization check result, and the access token is generated by the third network device after performing a second authorization check on the service message, and second authorization comprises authorization of the service message by a core network.

36. The method according to any one of claims 26 to 35, wherein the first network device comprises an application AI/ML assistance network function (AaaML NF) or a network exposure function (NEF).

37. The method according to any one of claims 26 to 36, wherein the fourth network device comprises an AI/ML AF.

38. The method according to claim 35, wherein the third network device comprises a CAPIF core function or a network repository function (NRF).

39. An authorization method, comprising:
receiving, by a second network device, a UE identifier and/or a group identifier in a service message from a first network device;
searching, by the second network device according to the UE identifier and/or the group identifier, for user consent and/or first service authorization of a UE involved in the service message; and
transmitting, by the second network device, the user consent and/or the first service authorization of the UE involved in the service message to the first network device.

40. The method according to claim 39, wherein user authorization parameter information comprises:
user consent parameters corresponding to multiple user identifiers and/or group identifiers, wherein the user consent parameters comprise at least one of: a purpose of data processing, a data type, and data fine granularity.

41. The method according to claim 39 or 40, wherein the user consent of the UE is used to indicate whether the consent has been granted to processing user data of the UE.

42. The method according to claim 39 or 40, wherein the first service authorization is used to indicate whether the UE is authorized to use a first service, and/or indicate a type of the first service that the UE is authorized to use.

43. The method according to claim 42, wherein the first service comprises an AI/ML service.

44. The method according to claim 43, wherein the AI/ML service comprises at least one of: selecting UE members, collecting an analysis result for the UE, and downloading an AI/ML model.

45. The method according to any one of claims 39 to 44, further comprising:
transmitting, by the second network device, user consent cancelling information of the UE involved in the service message to the first network device.

46. The method according to any one of claims 39 to 45, wherein the first network device comprises an application AI/ML assistance network function (AaaML NF) or a network exposure function (NEF).

47. The method according to any one of claims 39 to 46, wherein the second network device comprises a unified data management (UDM).

48. An authorization method, comprising:
receiving, by a third network device, a first authorization check result from a first network device, wherein the first authorization check comprises an authorization check for a UE involved in a service message; and
generating, by the third network device, an access token, and transmitting the access token to a fourth network device, wherein the access token comprises the first authorization check result.

49. The method according to claim 48, wherein the first authorization check comprises:
a check for user consent and/or first service authorization of the UE involved in the service message.

50. The method according to claim 49, wherein the user consent of the UE is used to indicate whether the consent has been granted to processing user data of the UE.

51. The method according to claim 49, wherein the first service authorization is used to indicate whether the UE is authorized to use a first service, and/or indicate a type of the first service that the UE is authorized to use.

52. The method according to claim 51, wherein the first service comprises an AI/ML service.

53. The method according to claim 52, wherein the AI/ML service comprises at least one of: selecting UE members, collecting an analysis result for the UE, and downloading an AI/ML model.

54. The method according to any one of claims 48 to 53, wherein
the access token is generated by the third network device after performing a second authorization check on the service message of the fourth network device;
wherein second authorization comprises authorization of the service message by a core network.

55. The method according to any one of claims 48 to 54, wherein the first network device comprises an application AI/ML assistance network function (AaaML NF) or a network exposure function (NEF).

56. The method according to any one of claims 48 to 55, wherein the third network device comprises a common application programming interface framework (CAPIF) core function or a network repository function (NRF).

57. A first network device, comprising:
a first receiving module, configured to receive a service message; and
a first checking module, configured to perform a first authorization check on the service message, wherein the first authorization check comprises an authorization check for a UE involved in the service message.

58. A fourth network device, comprising:
a second transmitting module, configured to transmit a service message to a first network device, wherein the service message is used for the first network device to perform a first authorization check, and the first authorization check comprises an authorization check for a UE involved in the service message.

59. A second network device, comprising:
a fifth receiving module, configured to receive a UE identifier and/or a group identifier in a service message from a first network device;
a searching module, configured to search for user consent and/or first service authorization of a UE involved in the service message according to the UE identifier and/or the group identifier; and
a third transmitting module, configured to transmit the user consent and/or the first service authorization of the UE involved in the service message to the first network device.

60. A third network device, comprising:
a sixth receiving module, configured to receive a first authorization check result from a first network device, wherein the first authorization check comprises an authorization check for a UE involved in a service message; and
a generating module, configured to generate an access token, and transmit the access token to a fourth network device, wherein the access token comprises the first authorization check result.

61. A communication device, comprising a processor and a memory, wherein the memory is configured to store a computer program, and the processor is configured to call the computer program stored in the memory and run the computer program, to perform the method according to any one of claims 1 to 25, 26 to 38, 39 to 47, or 48 to 56.

62. A chip, comprising a processor configured to call a computer program from a memory and run the computer program, to cause a device equipped with the chip to perform the method according to any one of claims 1 to 25, 26 to 38, 39 to 47, or 48 to 56.

63. A computer-readable storage medium, configured to store a computer program, wherein the computer program causes a computer to perform the method according to any one of claims 1 to 25, 26 to 38, 39 to 47, or 48 to 56.

64. A computer program product, comprising computer program instructions, wherein the computer program instructions cause a computer to perform the method according to any one of claims 1 to 25, 26 to 38, 39 to 47, or 48 to 56.

65. A computer program, wherein the computer program causes a computer to perform the method according to any one of claims 1 to 25, 26 to 38, 39 to 47, or 48 to 56.
